# EUROPÄISCHE PATENTANMELDUNG

(11) **EP 4 272 981 A1**
(43) Veröffentlichungstag der Anmeldung: **08.11.2023**
(21) Anmeldenummer: 23170954.4
(22) Anmeldetag: 02.05.2023
(51) Int. Cl.: B60D 1/06, B60D 1/46

(54) **BEFESTIGUNGSVORRICHTUNG, ANHÄNGERZUGVORRICHTUNG UND FAHRZEUG**

(30) Priorität: 03.05.2022 DE 102022204345
(71) Anmelder: Hoffmann, Franz-Joseph, 99869 Nessetal OT Goldbach (DE)
(72) Erfinder: Hoffmann, Franz-Joseph, 99869 Nessetal OT Goldbach (DE)
(74) Vertreter: Liedtke & Partner Patentanwälte

(57) **Zusammenfassung**

Die Erfindung betrifft eine Befestigungsvorrichtung (3) für ein Koppelelement (2) einer Anhängerzugvorrichtung (1) an einem Fahrzeug mit einer Fahrzeug-Befestigungsanordnung (4) zur Befestigung an einer Fahrzeugstruktur und einer Koppelelement-Befestigungsanordnung (5) zur Befestigung zumindest eines Koppelelements (2), wobei die Koppelelement-Befestigungsanordnung (5) mittels einer Parallelogrammführung (6) beweglich und in unterschiedlichen Positionen fixierbar an der Fahrzeug-Befestigungsanordnung (4) angeordnet ist.

Die Erfindung betrifft weiterhin eine Anhängerzugvorrichtung (1) und ein Fahrzeug.

## Beschreibung

Die Erfindung betrifft eine Befestigungsvorrichtung für ein Koppelelement einer Anhängerzugvorrichtung an einem Fahrzeug.

Die Erfindung betrifft weiterhin eine Anhängerzugvorrichtung und ein Fahrzeug.

Aus dem Stand der Technik sind allgemein Anhängerzugvorrichtungen für Fahrzeuge bekannt. Solche Anhängerzugvorrichtungen, beispielsweise beschrieben in der DE 613 541 A, DE 11 84 649 A, DE 297 23 316 U1 und DE 22 55 905 A, weisen jeweils ein an einem Fahrzeug befestigtes oder befestigbares Koppelelement, beispielsweise einen Kugelkopf oder eine Bolzenanordnung oder eine Kombination beider, auf.

Der Erfindung liegt die Aufgabe zu Grunde, eine neuartige Befestigungsvorrichtung für ein Koppelelement einer Anhängerzugvorrichtung an einem Fahrzeug, eine neuartige Anhängerzugvorrichtung und ein neuartiges Fahrzeug anzugeben.

Die Aufgabe wird erfindungsgemäß gelöst durch
- eine Befestigungsvorrichtung, welche die im Anspruch 1 angegebenen Merkmale aufweist,
- eine Anhängerzugvorrichtung, welche die im Anspruch 7 angegebenen Merkmale aufweist, und
- ein Fahrzeug, welches die im Anspruch 9 oder Anspruch 10 angegebenen Merkmale aufweist.

Vorteilhafte Ausgestaltungen der Erfindung sind Gegenstand der abhängigen Ansprüche.

Die erfindungsgemäße Befestigungsvorrichtung für ein Koppelelement einer Anhängerzugvorrichtung an einem Fahrzeug weist eine Fahrzeug-Befestigungsanordnung zur Befestigung an einer Fahrzeugstruktur und eine Koppelelement-Befestigungsanordnung zur Befestigung zumindest eines Koppelelements auf. Dabei ist die Koppelelement-Befestigungsanordnung mittels einer Parallelogrammführung beweglich und in unterschiedlichen Positionen fixierbar an der Fahrzeug-Befestigungsanordnung angeordnet.

Diese Befestigungsvorrichtung ermöglicht bei entsprechender Anordnung an einem Fahrzeug eine Anpassung einer Höhe des Koppelelements relativ zu einer Fahrbahnoberfläche. Somit können beispielsweise Höhenveränderungen des Fahrzeugs, beispielsweise aufgrund einer Montage einer Fahrwerkshöherlegung oder einer Fahrwerkstieferlegung ausgeglichen werden. Dabei kann die Befestigungsvorrichtung aufgrund der Anordnung der Koppelelement-Befestigungsanordnung in unterschiedlichen Positionen und somit in unterschiedlichen Höhen relativ zum Fahrzeug auch für verschiedene Fahrzeugtypen verwendet werden. Somit ist ein sicherer Betrieb eines Anhängers an einem Fahrzeug unabhängig von dessen Fahrwerkshöhe bzw. Karosseriehöhe über der Fahrbahn möglich.

In einer möglichen Ausgestaltung der Befestigungsvorrichtung weist die Parallelogrammführung zumindest zwei Gelenkarme auf, wobei jeder Gelenkarm einen Gelenkpunkt, welcher mit einem Befestigungs-Gelenkpunkt der Fahrzeug-Befestigungsanordnung drehbar gekoppelt ist, aufweist. Weiterhin weist jeder Gelenkarm einen Gelenkpunkt, welcher mit einem Befestigungs-Gelenkpunkt der Koppelelement-Befestigungsanordnung drehbar gekoppelt ist, auf. Dabei bilden die mit der Fahrzeug-Befestigungsanordnung und der Koppelelement-Befestigungsanordnung drehbar gekoppelten Gelenkpunkte Eckpunkte eines Parallelogramms. Mittels der Gelenkarme ist eine sichere und zuverlässige Ausbildung der Parallelogrammführung realisierbar.

In einer weiteren möglichen Ausgestaltung der Befestigungsvorrichtung weist zumindest einer der Gelenkarme ein beabstandet zu beiden Gelenkpunkten des Gelenkarms angeordnetes Anbindungselement auf. Die Fahrzeug-Befestigungsanordnung und/oder die Koppelelement-Befestigungsanordnung weisen oder weist mehrere auf einem sich radial um einen Befestigungs-Gelenkpunkt, an welchem der Gelenkarm mit einem der Gelenkpunkte drehbar befestigt ist, angeordneten Kreisabschnitt angeordnete Befestigungs-Anbindungselemente auf. Der Gelenkarm mit dem Anbindungselement ist in unterschiedlichen, um diesen Gelenkpunkt gedrehten Drehpositionen in einem der jeweiligen Drehposition zugeordneten Befestigungs-Anbindungselement befestigbar. Eine solche Befestigung ermöglicht eine einfache und sehr variable Fixierung der Koppelelement-Befestigungsanordnung in unterschiedlichen Positionen relativ zur Fahrzeug-Befestigungsanordnung.

In einer weiteren möglichen Ausgestaltung der Befestigungsvorrichtung weist die Fahrzeug-Befestigungsanordnung zwei sich gegenüberliegende und beabstandet zueinander angeordnete Fahrzeug-Befestigungselemente zur Befestigung an der Fahrzeugstruktur auf. Die Koppelelement-Befestigungsanordnung weist zwei sich gegenüberliegende und beabstandet zueinander angeordnete Koppelelement-Befestigungselemente zur Befestigung zumindest eines Koppelelements auf und die Parallelogrammführung weist zumindest vier Gelenkarme auf. Dabei weisen zwei der Gelenkarme jeweils einen Gelenkpunkt, welcher mit einem Befestigungs-Gelenkpunkt einer der Fahrzeug-Befestigungselemente drehbar gekoppelt ist, und jeweils einen Gelenkpunkt, welcher mit einem Befestigungs-Gelenkpunkt einer der Koppelelement-Befestigungselemente drehbar gekoppelt ist, auf. Die beiden verbleibenden Gelenkarme weisen jeweils einen Gelenkpunkt, welcher mit einem Befestigungs-Gelenkpunkt des weiteren gegenüberliegenden Fahrzeug-Befestigungselements drehbar gekoppelt ist, und jeweils einen Gelenkpunkt, welcher mit einem Befestigungs-Gelenkpunkt des weiteren gegenüberliegenden Koppelelement-Befestigungselements drehbar gekoppelt ist, auf. Die gegenüberliegende und beabstandete Anordnung der Fahrzeug-Befestigungselemente, der Koppelelement-Befestigungselemente und von jeweils zwei Gelenkarme bewirkt eine besonders stabile und verwindungssteife Ausbildung der Befestigungsvorrichtung.

In einer weiteren möglichen Ausgestaltung der Befestigungsvorrichtung weist einer der Gelenkarme, welcher mit einem Befestigungs-Gelenkpunkt einer der Fahrzeug-Befestigungselemente und mit einem Befestigungs-Gelenkpunkt einer der Koppelelement-Befestigungselemente drehbar gekoppelt ist, ein beabstandet zu beiden Gelenkpunkten des Gelenkarms angeordnetes Anbindungselement auf. Ein weiterer Gelenkarm, welcher mit einem Befestigungs-Gelenkpunkt des weiteren gegenüberliegenden Fahrzeug-Befestigungselements und mit einem Befestigungs-Gelenkpunkt des weiteren gegenüberliegenden Koppelelement-Befestigungselements drehbar gekoppelt ist, weist ein beabstandet zu beiden Gelenkpunkten des Gelenkarms angeordnetes Anbindungselement auf. Beide Fahrzeug-Befestigungselemente und/oder beide Koppelelement-Befestigungselemente weisen jeweils mehrere auf einem sich radial um einen Befestigungs-Gelenkpunkt, an welchem der jeweilige Gelenkarm mit einem der Gelenkpunkte drehbar befestigt ist, angeordneten Kreisabschnitt angeordnete Befestigungs-Anbindungselemente auf, wobei die Gelenkarme mit dem Anbindungselement in unterschiedlichen, um diesen Gelenkpunkt gedrehten Drehpositionen in einer der jeweiligen Drehposition zugeordneten Befestigungs-Anbindungselemente befestigbar sind. Eine solche Befestigung ermöglicht eine einfache und sehr variable Fixierung der Koppelelement-Befestigungsanordnung in unterschiedlichen Positionen relativ zur Fahrzeug-Befestigungsanordnung.

In einer weiteren möglichen Ausgestaltung der Befestigungsvorrichtung sind die Gelenkpunkte der Gelenkarme, die Befestigungs-Gelenkpunkte der Fahrzeug-Befestigungsanordnung und die Befestigungs-Gelenkpunkte der Koppelelement-Befestigungsanordnung jeweils als Bohrung ausgebildet. Die entsprechenden Gelenkpunkte der Gelenkarme sind an den Befestigungs-Gelenkpunkten der Fahrzeug-Befestigungsanordnung und die entsprechenden Gelenkpunkte der Gelenkarme an Befestigungs-Gelenkpunkten der Koppelelement-Befestigungsanordnung jeweils mittels einer Schrauben-Mutter-Befestigung gekoppelt. Eine solche Ausbildung lässt sich besonders einfach und kostengünstig realisieren und zeichnet sich durch eine hohe mechanische Stabilität und einfache Handhabbarkeit aus.

Die erfindungsgemäße Anhängerzugvorrichtung weist eine vorgenannte Befestigungsvorrichtung und zumindest ein an der Koppelelement-Befestigungsanordnung befestigtes Koppelelement auf. Diese Anhängerzugvorrichtung ermöglicht bei entsprechender Anordnung an einem Fahrzeug eine Anpassung einer Höhe des Koppelelements relativ zu einer Fahrbahnoberfläche. Somit können beispielsweise Höhenveränderungen des Fahrzeugs, beispielsweise aufgrund einer Montage einer Fahrwerkshöherlegung oder einer Fahrwerkstieferlegung ausgeglichen werden. Dabei kann die Befestigungsvorrichtung aufgrund der Anordnung der Koppelelement-Befestigungsanordnung in unterschiedlichen Positionen und somit in unterschiedlichen Höhen relativ zum Fahrzeug auch für verschiedene Fahrzeugtypen verwendet werden. Somit ist ein sicherer Betrieb eines Anhängers an einem Fahrzeug unabhängig von dessen Fahrwerkshöhe bzw. Karosseriehöhe über der Fahrbahn möglich.

In einer weiteren möglichen Ausgestaltung der Anhängerzugvorrichtung weist das Koppelelement zumindest einen Kugelkopf und/oder zumindest eine Bolzenanordnung auf.

Ein erfindungsgemäßes Fahrzeug weist eine Fahrzeugstruktur und eine vorgenannte, mittels der Fahrzeug-Befestigungsanordnung an der Fahrzeugstruktur befestigte Befestigungsvorrichtung auf. Diese Befestigungsvorrichtung ermöglicht dabei eine Anpassung einer Höhe des Koppelelements relativ zu einer Fahrbahnoberfläche. Somit können beispielsweise Höhenveränderungen des Fahrzeugs, beispielsweise aufgrund einer Montage einer Fahrwerkshöherlegung oder einer Fahrwerkstieferlegung ausgeglichen werden. Somit ist ein sicherer Betrieb eines Anhängers an einem Fahrzeug unabhängig von dessen Fahrwerkshöhe bzw. Karosseriehöhe über der Fahrbahn möglich.

Ein weiteres erfindungsgemäßes Fahrzeug weist eine Fahrzeugstruktur und eine vorgenannte, mittels der Fahrzeug-Befestigungsanordnung an der Fahrzeugstruktur befestigte Anhängerzugvorrichtung auf. Die Anhängerzugvorrichtung ermöglicht dabei eine Anpassung einer Höhe des Koppelelements relativ zu einer Fahrbahnoberfläche. Somit können beispielsweise Höhenveränderungen des Fahrzeugs, beispielsweise aufgrund einer Montage einer Fahrwerkshöherlegung oder einer Fahrwerkstieferlegung ausgeglichen werden. Somit ist ein sicherer Betrieb eines Anhängers an einem Fahrzeug unabhängig von dessen Fahrwerkshöhe bzw. Karosseriehöhe über der Fahrbahn möglich.

Ausführungsbeispiele der Erfindung werden im Folgenden anhand von Zeichnungen näher erläutert.

Darin zeigen:
- Figur 1: schematisch eine Explosionsdarstellung einer Anhängerzugvorrichtung,
- Figur 2: schematisch eine perspektivische Darstellung der Anhängerzugvorrichtung gemäß Figur 1 mit einem in einer relativen Position zu einem Fahrzeug-Befestigungsanordnung angeordneten Koppelelement,
- Figur 3: schematisch eine Seitenansicht der Anhängerzugvorrichtung gemäß Figur 2,
- Figur 4: schematisch eine Draufsicht einer Vorderseite der Anhängerzugvorrichtung gemäß Figur 2,
- Figur 5: schematisch eine Draufsicht einer Oberseite der Anhängerzugvorrichtung gemäß Figur 2,
- Figur 6: schematisch eine Draufsicht einer Unterseite der Anhängerzugvorrichtung gemäß Figur 2,
- Figur 7: schematisch eine perspektivische Darstellung der Anhängerzugvorrichtung gemäß Figur 1 mit einem in einer weiteren relativen Position zu einem Fahrzeug-Befestigungsanordnung angeordneten Koppelelement,
- Figur 8: schematisch eine Seitenansicht der Anhängerzugvorrichtung gemäß Figur 7,
- Figur 9: schematisch eine Draufsicht einer Vorderseite der Anhängerzugvorrichtung gemäß Figur 7,
- Figur 10: schematisch eine Draufsicht einer Oberseite der Anhängerzugvorrichtung gemäß Figur 7,
- Figur 11: schematisch eine Draufsicht einer Unterseite der Anhängerzugvorrichtung gemäß Figur 7,
- Figur 12: schematisch eine perspektivische Darstellung der Anhängerzugvorrichtung gemäß Figur 1 mit einem in einer weiteren relativen Position zu einem Fahrzeug-Befestigungsanordnung angeordneten Koppelelement,
- Figur 13: schematisch eine Seitenansicht der Anhängerzugvorrichtung gemäß Figur 12,
- Figur 14: schematisch eine Draufsicht einer Vorderseite der Anhängerzugvorrichtung gemäß Figur 12,
- Figur 15: schematisch eine Draufsicht einer Oberseite der Anhängerzugvorrichtung gemäß Figur 12 und
- Figur 16: schematisch eine Draufsicht einer Unterseite der Anhängerzugvorrichtung gemäß Figur 12.

Einander entsprechende Teile sind in allen Figuren mit den gleichen Bezugszeichen versehen.

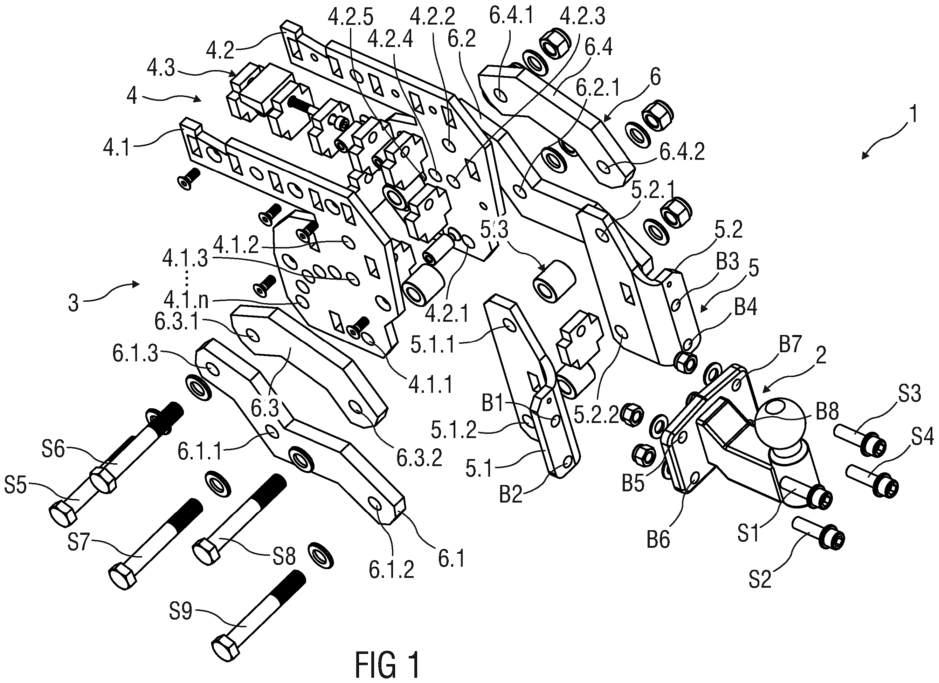

In **Figur 1** ist eine Explosionsdarstellung eines möglichen Ausführungsbeispiels einer Anhängerzugvorrichtung 1 für ein nicht gezeigtes Fahrzeug dargestellt. Bei dem Fahrzeug handelt es sich beispielsweise um einen so genannten Pick-up.

Die Anhängerzugvorrichtung 1 weist ein einen Kugelkopf umfassendes Koppelelement 2 und eine Befestigungsvorrichtung 3 zur Befestigung des Koppelelements 2 an einem Fahrzeug auf.

Um eine Höhenverstellung des Koppelelements 2 an dem Fahrzeug zu realisieren, weist die Befestigungsvorrichtung 3 eine Fahrzeug-Befestigungsanordnung 4 zur Befestigung an einer Fahrzeugstruktur und eine Koppelelement-Befestigungsanordnung 5 zur Befestigung zumindest eines Koppelelements 2 auf. Dabei ist die Koppelelement-Befestigungsanordnung 5 mittels einer Parallelogrammführung 6 beweglich und in unterschiedlichen Positionen fixierbar an der Fahrzeug-Befestigungsanordnung 4 angeordnet.

Im dargestellten Ausführungsbeispiel weist die Fahrzeug-Befestigungsanordnung 4 zwei sich gegenüberliegende plattenförmige Fahrzeug-Befestigungselemente 4.1, 4.2 zur Befestigung an der Fahrzeugstruktur auf. Die Fahrzeug-Befestigungselemente 4.1, 4.2 sind mittels einer Abstandsanordnung 4.3, welche eine Mehrzahl von Abstandselementen umfasst, beabstandet voneinander angeordnet und aneinander befestigt.

Die Koppelelement-Befestigungsanordnung 5 weist zwei Koppelelement-Befestigungselemente 5.1, 5.2 zur Befestigung des Koppelelements 2 auf. Dabei sind die Koppelelement-Befestigungselemente 5.1, 5.2, mittels einer Abstandsanordnung 5.3, welche eine Mehrzahl von Abstandselementen umfasst, beabstandet voneinander angeordnet und aneinander befestigt.

Zur Befestigung weisen die Koppelelement-Befestigungselemente 5.1, 5.2 jeweils zwei Bohrungen B1 bis B4 auf, welche derart mit Bohrungen B5 bis B8 des Koppelelements 2 korrespondieren, dass das Koppelelement 2 mittels Schrauben-Mutter-Befestigungen S1 bis S4 an der Koppelelement-Befestigungsanordnung 5 befestigbar ist.

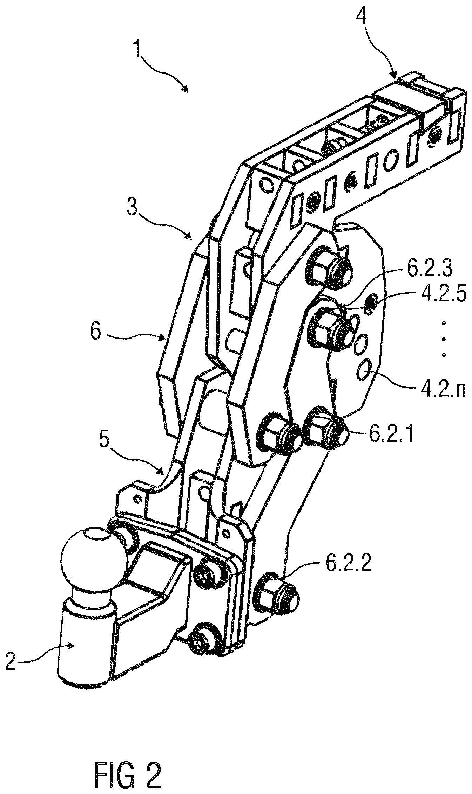

Die Parallelogrammführung 6 umfasst vier Gelenkarme 6.1 bis 6.4. Dabei weist einer der Gelenkarme 6.1 einen Gelenkpunkt 6.1.1, welcher mit einem Befestigungs-Gelenkpunkt 4.1.1 des Fahrzeug-Befestigungselements 4.1 drehbar gekoppelt ist, und einen Gelenkpunkt 4.1.2, welcher mit einem Befestigungs-Gelenkpunkt 5.1.2 des Koppelelement-Befestigungselements 5.1 drehbar gekoppelt ist, auf. Ein weiterer, dem Gelenkarm 6.1 gegenüberliegender Gelenkarm 6.2, weist einen Gelenkpunkt 6.2.1, welcher mit einem Befestigungs-Gelenkpunkt 4.2.1 des Fahrzeug-Befestigungselements 4.2 drehbar gekoppelt ist, und einen in Figur 2 näher dargestellten Gelenkpunkt 6.2.2, welcher mit einem Befestigungs-Gelenkpunkt 5.2.2 des Koppelelement-Befestigungselements 5.2 drehbar gekoppelt ist, auf.

Ein weiterer, auf der gleichen Seite wie der Gelenkarm 6.1 befindlicher Gelenkarm 6.3, weist einen Gelenkpunkt 6.3.1, welcher mit einem Befestigungs-Gelenkpunkt 4.1.2 des Fahrzeug-Befestigungselements 4.1 drehbar gekoppelt ist, und einen Gelenkpunkt 6.3.2, welcher mit einem Befestigungs-Gelenkpunkt 5.1.1 des Koppelelement-Befestigungselements 5.1 drehbar gekoppelt ist, auf. Ein weiterer, dem Gelenkarm 6.3 gegenüberliegender Gelenkarm 6.4, weist einen Gelenkpunkt 6.4.1, welcher mit einem Befestigungs-Gelenkpunkt 4.2.2 des Fahrzeug-Befestigungselements 4.2 drehbar gekoppelt ist, und einen Gelenkpunkt 6.4.2, welcher mit einem Befestigungs-Gelenkpunkt 5.2.1 des Koppelelement-Befestigungselements 5.2 drehbar gekoppelt ist, auf.

Die genannten Gelenkpunkte 6.1.1, 6.1.2, 6.2.1, 6.2.2, 6.3.1, 6.3.2, 6.4.1, 6.4.2 bilden dabei im montierten Zustand an den Befestigungs-Gelenkpunkten 4.1.1, 4.1.2, 4.2.1, 4.2.2, 5.1.1, 5.1.2, 5.2.1, 5.2.2 Eckpunkte eines Parallelogramms.

Sowohl die Gelenkpunkte 6.1.1, 6.1.2, 6.2.1, 6.2.2, 6.3.1, 6.3.2, 6.4.1, 6.4.2 als auch die Befestigungs-Gelenkpunkte 4.1.1, 4.1.2, 4.2.1, 4.2.2, 5.1.1, 5.1.2, 5.2.1, 5.2.2 sind jeweils als Bohrung ausgebildet. Die Gelenkpunkte 6.1.1, 6.1.2, 6.2.1, 6.2.2, 6.3.1, 6.3.2, 6.4.1, 6.4.2 sind jeweils mittels einer Schrauben-Mutter-Befestigung S6 bis S9 an den zugehörigen Befestigungs-Gelenkpunkten 4.1.1, 4.1.2, 4.2.1, 4.2.2, 5.1.1, 5.1.2, 5.2.1, 5.2.2 befestigt.

Die Gelenkarme 6.1, 6.2 sind derart um die Gelenkpunkte 6.1.1, 6.1.2, 6.2.1, 6.2.2, 6.3.1, 6.3.2, 6.4.1, 6.4.2 und Befestigungs-Gelenkpunkten 4.1.1, 4.1.2, 4.2.1, 4.2.2, 5.1.1, 5.1.2, 5.2.1, 5.2.2 schwenkbar, dass das Koppelelement 2 bei einer Höhenverstellung nicht in seiner Neigung verändert wird.

Um das Koppelelement 2 in einer gewünschten Höhe zu fixieren, weisen die beiden Gelenkarme 6.1, 6.2 jeweils ein beabstandet zu ihren Gelenkpunkten 6.1.1, 6.2.1 angeordnetes Anbindungselement 6.1.3, 6.2.3 auf, wobei das Anbindungselement 6.2.3 in Figur 2 näher dargestellt ist.

Beide Fahrzeug-Befestigungselemente 4.1, 4.2 weisen jeweils mehrere auf einem sich radial um den Befestigungs-Gelenkpunkt 4.1.1, 4.2.1, an welchem der jeweilige Gelenkarm 6.1, 6.2 mit dem Gelenkpunkt 6.1.1, 6.2.2 drehbar befestigt ist, angeordneten Kreisabschnitt angeordnete Befestigungs-Anbindungselemente 4.1.3 bis 4.1.n, 4.2.3 bis 4.2.n auf.

Die Anbindungselemente 6.1.3, 6.2.3 der Gelenkarme 6.1, 6.2 und die Befestigungs-Anbindungselemente 4.1.3 bis 4.1.n, 4.2.3 bis 4.2.n sind dabei jeweils als Bohrung ausgebildet, wobei die Anbindungselemente 6.1.3, 6.2.3 der Gelenkarme 6.1, 6.2 mittels einer Schrauben-Mutter-Befestigung S5 an dem jeweils zugehörigen Befestigungs-Anbindungselement 4.1.3 bis 4.1.n, 4.2.3 bis 4.2.n befestigbar sind.

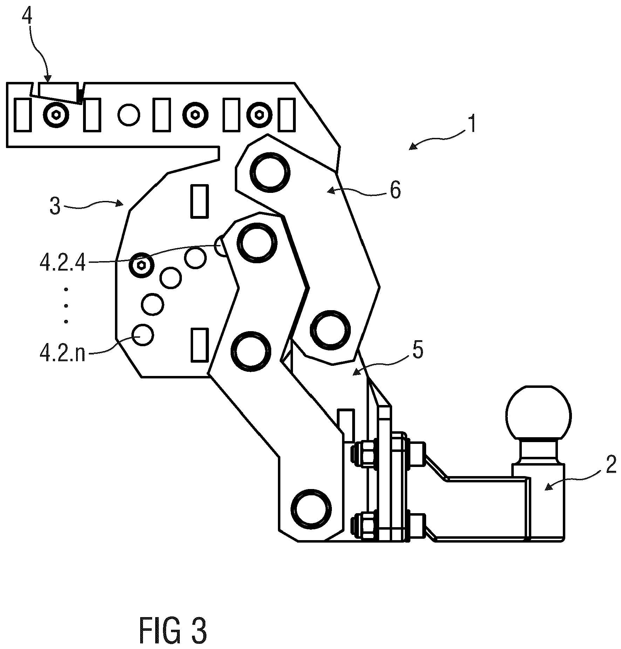

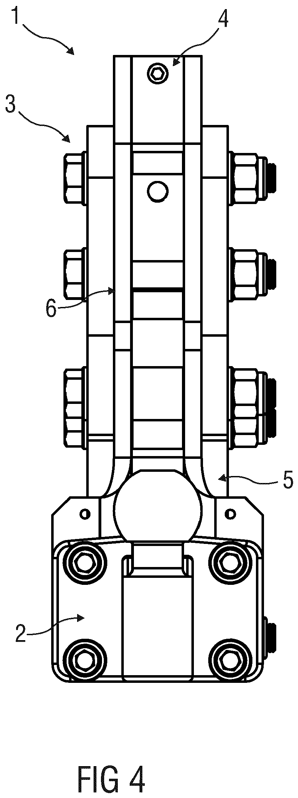

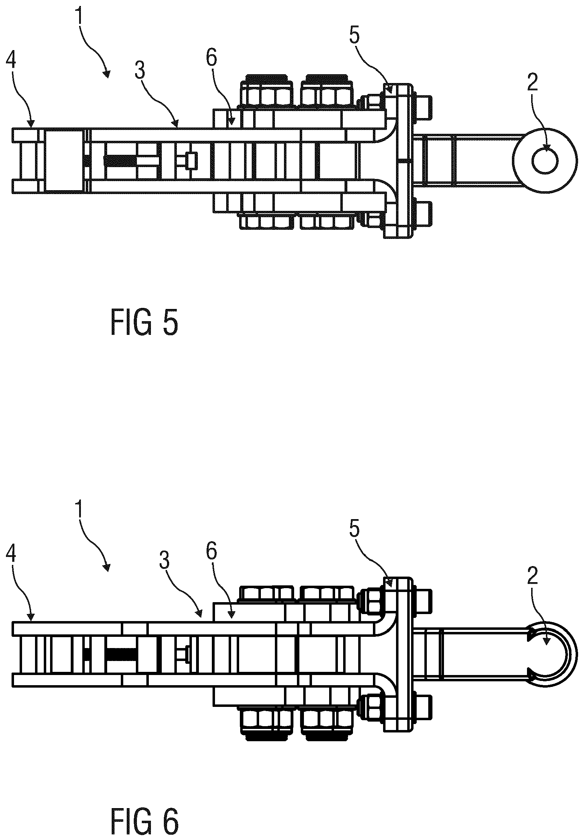

Die Figuren 2 bis 6 zeigen in verschiedenen Darstellungen die Anhängerzugvorrichtung 1 gemäß Figur 1 mit einem derart in einer relativen Position zu einer Fahrzeug-Befestigungsanordnung 4 angeordneten Koppelelement 2, dass das Koppelelement 2 in einer untersten Position angeordnet ist.

Dabei sind die Gelenkarme 6.1 bis 6.4 derart geschwenkt, dass sich die oberen Gelenkarme 6.3, 6.4 auf dem jeweils darunter befindlichen Gelenkarm 6.1, 6.2 abstützen. Hierdurch werden eine weitere Erhöhung einer mechanischen Stabilität und ein Endanschlag realisiert. Dabei sind die unteren Gelenkarme 6.1, 6.2 mittels ihrer Anbindungselemente 6.1.3, 6.2.3 und der Schrauben-Mutter-Befestigung S5 an dem jeweils zugehörigen Befestigungs-Anbindungselement 4.1.3, 4.2.3 befestigt und so in ihrer Position fixiert.

In der dargestellten Position befindet sich das Koppelelement 2 in einer untersten möglichen Position, wobei so beispielsweise eine besonders große Fahrwerkhöherlegung des Fahrzeugs ausgeglichen werden kann.

Die in den Figuren 2 bis 6 dargestellte Anhängerzugvorrichtung 1 ist analog zu der in Figur 1 dargestellten Anhängerzugvorrichtung 1 ausgebildet. Zur Wahrung der Übersichtlichkeit sind jedoch nicht alle Teile mit Bezugszeichen versehen.

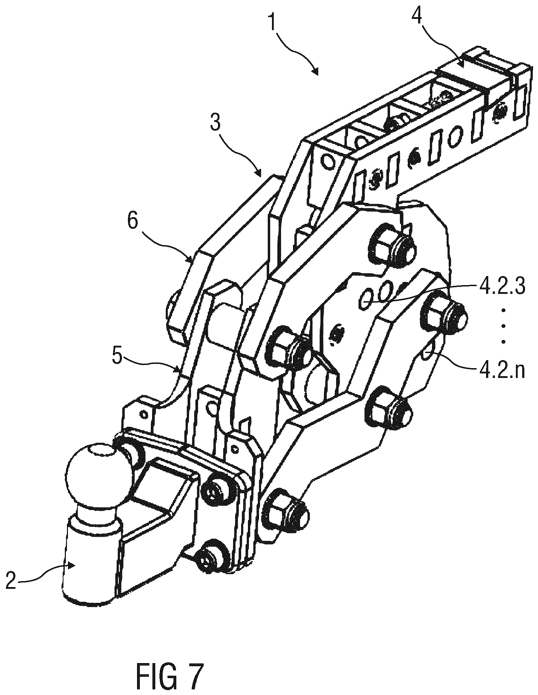

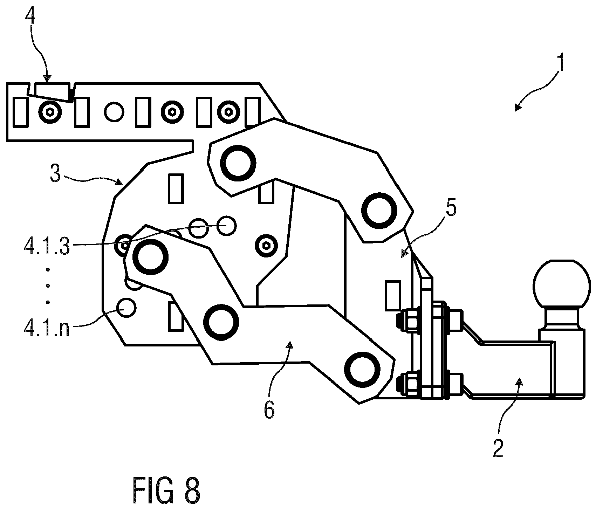

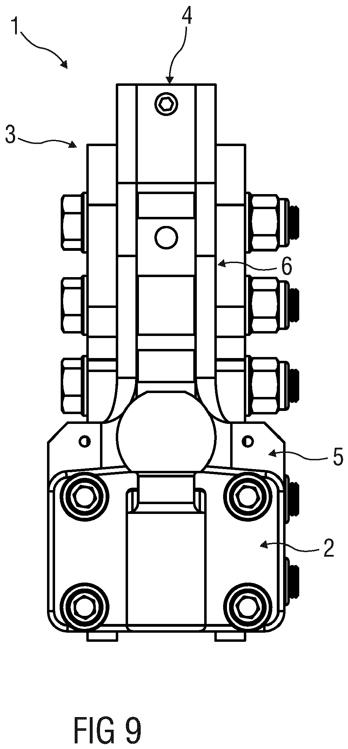

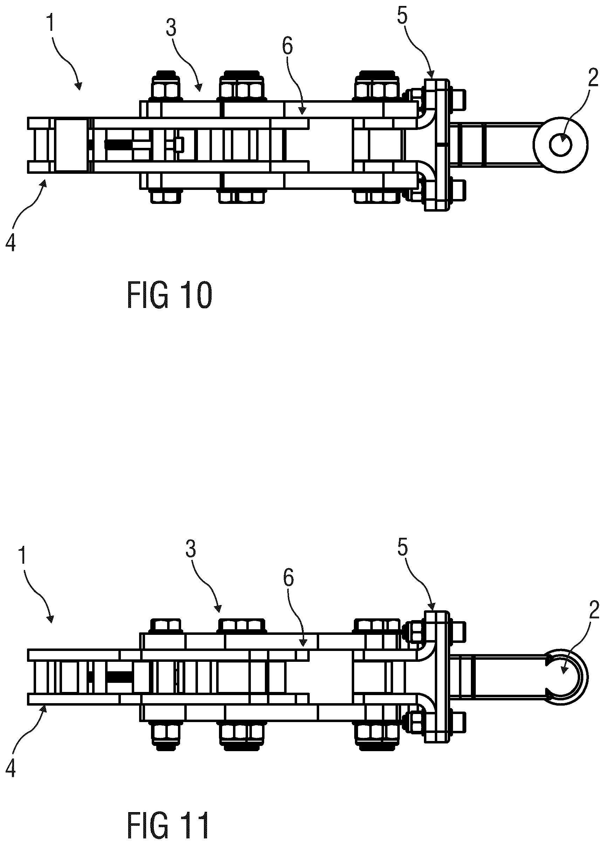

Die Figuren 7 bis 11 zeigen in verschiedenen Darstellungen die Anhängerzugvorrichtung 1 gemäß Figur 1 mit einem derart in einer relativen Position zu einer Fahrzeug-Befestigungsanordnung 4 angeordneten Koppelelement 2, dass das Koppelelement 2 in einer mittleren Position angeordnet ist.

Dabei sind die Gelenkarme 6.1 bis 6.4 derart geschwenkt, dass diese mittels ihrer Anbindungselemente 6.1.3, 6.2.3 und der Schrauben-Mutter-Befestigung S5 an dem jeweils zugehörigen Befestigungs-Anbindungselement 4.1.6, 4.2.6 befestigt und so in ihrer Position fixiert sind.

In der dargestellten Position befindet sich das Koppelelement 2 in einer mittleren Position, wobei so beispielsweise eine mittlere Fahrwerkhöherlegung des Fahrzeugs ausgeglichen werden kann.

Die in den Figuren 7 bis 11 dargestellte Anhängerzugvorrichtung 1 ist analog zu der in Figur 1 dargestellten Anhängerzugvorrichtung 1 ausgebildet. Zur Wahrung der Übersichtlichkeit sind jedoch nicht alle Teile mit Bezugszeichen versehen.

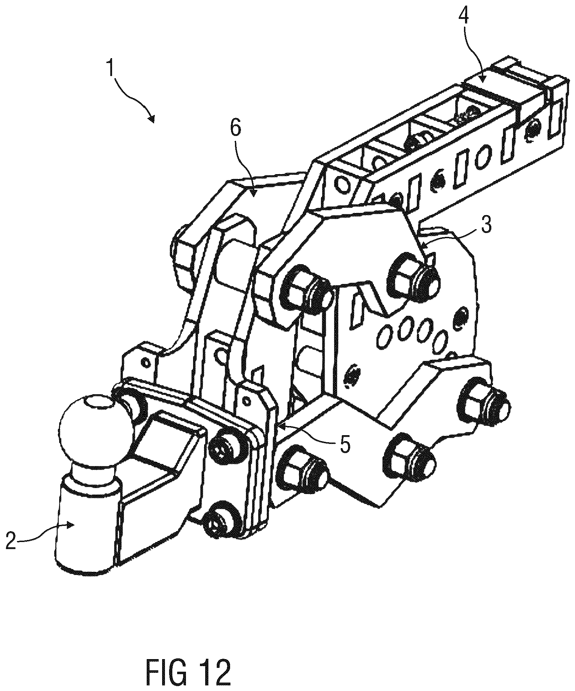

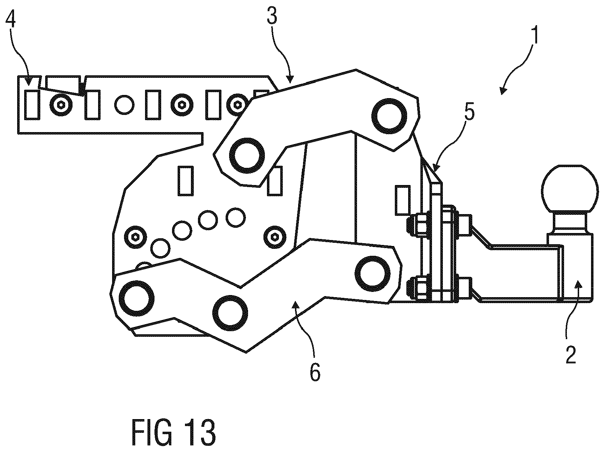

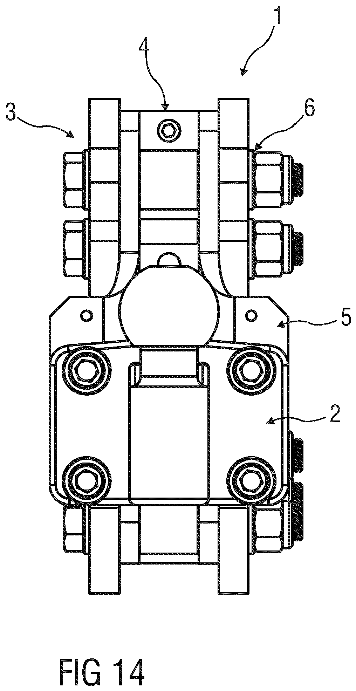

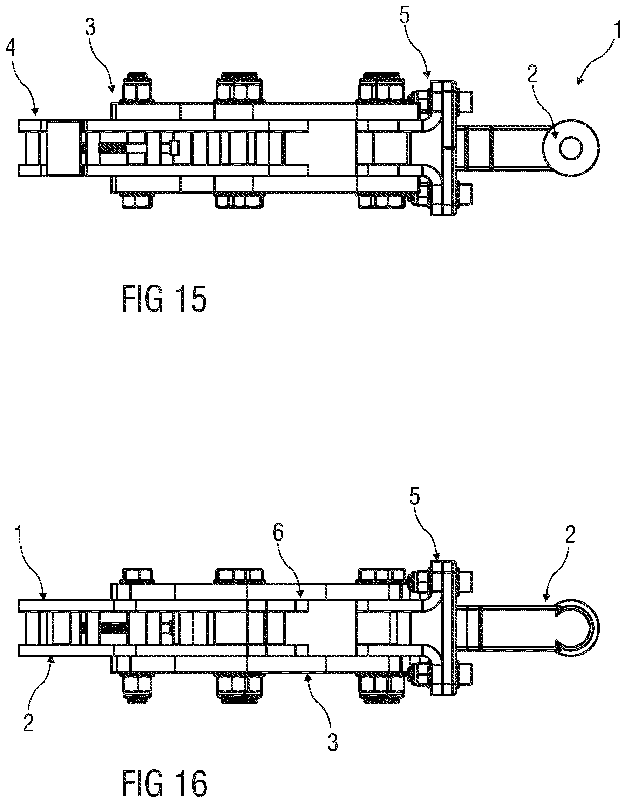

Die Figuren 12 bis 16 zeigen in verschiedenen Darstellungen die Anhängerzugvorrichtung 1 gemäß Figur 1 mit einem derart in einer relativen Position zu einer Fahrzeug-Befestigungsanordnung 4 angeordneten Koppelelement 2, dass das Koppelelement 2 in einer obersten Position angeordnet ist.

Dabei sind die Gelenkarme 6.1 bis 6.4 derart geschwenkt, dass diese mittels ihrer Anbindungselemente 6.1.3, 6.2.3 und der Schrauben-Mutter-Befestigung S5 an dem jeweils zugehörigen Befestigungs-Anbindungselement 4.1.n, 4.2.n befestigt und so in ihrer Position fixiert sind.

In der dargestellten Position befindet sich das Koppelelement 2 in einer höchstmöglichen Position, wobei so beispielsweise eine geringe Fahrwerkhöherlegung des Fahrzeugs ausgeglichen werden kann.

Die in den Figuren 12 bis 16 dargestellte Anhängerzugvorrichtung 1 ist analog zu der in Figur 1 dargestellten Anhängerzugvorrichtung 1 ausgebildet. Zur Wahrung der Übersichtlichkeit sind jedoch nicht alle Teile mit Bezugszeichen versehen.

### BEZUGSZEICHENLISTE

- 1: Anhängerzugvorrichtung
- 2: Koppelelement
- 3: Befestigungsvorrichtung
- 4: Fahrzeug-Befestigungsanordnung
- 4.1: Fahrzeug-Befestigungselement
- 4.1.1: Befestigungs-Gelenkpunkt
- 4.1.2: Befestigungs-Gelenkpunkt
- 4.1.3 bis 4.1.n: Befestigungs-Anbindungselement
- 4.2: Fahrzeug-Befestigungselement
- 4.2.1: Befestigungs-Gelenkpunkt
- 4.2.2: Befestigungs-Gelenkpunkt
- 4.2.3 bis 4.2.n: Befestigungs-Anbindungselement
- 4.3: Abstandsanordnung
- 5: Koppelelement-Befestigungsanordnung
- 5.1: Koppelelement-Befestigungselement
- 5.1.1: Befestigungs-Gelenkpunkt
- 5.1.2: Befestigungs-Gelenkpunkt
- 5.2: Koppelelement-Befestigungselement
- 5.2.1: Befestigungs-Gelenkpunkt
- 5.2.2: Befestigungs-Gelenkpunkt
- 5.3: Abstandsanordnung
- 6: Parallelogrammführung
- 6.1: Gelenkarm
- 6.1.1: Gelenkpunkt
- 6.1.2: Gelenkpunkt
- 6.1.3: Anbindungselement
- 6.2: Gelenkarm
- 6.2.1: Gelenkpunkt
- 6.2.2: Gelenkpunkt
- 6.2.3: Anbindungselement
- 6.3: Gelenkarm
- 6.3.1: Gelenkpunkt
- 6.3.2: Gelenkpunkt
- 6.4: Gelenkarm
- 6.4.1: Gelenkpunkt
- 6.4.2: Gelenkpunkt

- B1 bis B8: Bohrung
- S1 bis S9: Schrauben-Mutter-Befestigung

## Patentansprüche

1. Befestigungsvorrichtung (3) für ein Koppelelement (2) einer Anhängerzugvorrichtung (1) an einem Fahrzeug mit
- einer Fahrzeug-Befestigungsanordnung (4) zur Befestigung an einer Fahrzeugstruktur und
- einer Koppelelement-Befestigungsanordnung (5) zur Befestigung zumindest eines Koppelelements (2),
wobei die Koppelelement-Befestigungsanordnung (5) mittels einer Parallelogrammführung (6) beweglich und in unterschiedlichen Positionen fixierbar an der Fahrzeug-Befestigungsanordnung (4) angeordnet ist.

2. Befestigungsvorrichtung (3) nach Anspruch 1, wobei
- die Parallelogrammführung (6) zumindest zwei Gelenkarme (6.1 bis 6.4) aufweist,
- jeder Gelenkarm (6.1 bis 6.4) einen Gelenkpunkt (6.1.1, 6.2.1, 6.3.1, 6.4.1), welcher mit einem Befestigungs-Gelenkpunkt (4.1.1, 4.1.2, 4.2.1, 4.2.2) der Fahrzeug-Befestigungsanordnung (4) drehbar gekoppelt ist, aufweist,
- jeder Gelenkarm (6.1 bis 6.4) einen Gelenkpunkt (6.1.2, 6.2.2, 6.3.2, 6.4.2), welcher mit einem Befestigungs-Gelenkpunkt (5.1.1, 5.1.2, 5.2.1, 5.2.2) der Koppelelement-Befestigungsanordnung (5) drehbar gekoppelt ist, aufweist und
- die mit der Fahrzeug-Befestigungsanordnung (4) und der Koppelelement-Befestigungsanordnung (5) drehbar gekoppelten Gelenkpunkte (6.1.1, 6.2.1, 6.3.1, 6.4.1, 6.1.2, 6.2.2, 6.3.2, 6.4.2) Eckpunkte eines Parallelogramms bilden.

3. Befestigungsvorrichtung (3) nach Anspruch 2, wobei
- zumindest einer der Gelenkarme (6.1 bis 6.4) ein beabstandet zu beiden Gelenkpunkten (6.1.1, 6.2.1, 6.3.1, 6.4.1, 6.1.2, 6.2.2, 6.3.2, 6.4.2) des Gelenkarms (6.1 bis 6.4) angeordnetes Anbindungselement (6.1.3, 6.2.3) aufweist,
- die Fahrzeug-Befestigungsanordnung (4) und/oder die Koppelelement-Befestigungsanordnung (5) mehrere auf einem sich radial um einen Befestigungs-Gelenkpunkt (4.1.1, 4.1.2, 4.2.1, 4.2.2, 5.1.1, 5.1.2, 5.2.1, 5.2.2), an welchem der Gelenkarm (6.1 bis 6.4) mit einem der Gelenkpunkte (6.1.1, 6.2.1, 6.3.1, 6.4.1, 6.1.2, 6.2.2, 6.3.2, 6.4.2) drehbar befestigt ist, angeordneten Kreisabschnitt angeordnete Befestigungs-Anbindungselemente (4.1.3 bis 4.1.n, 4.2.3 bis 4.2.n) aufweist und
- der Gelenkarm (6.1 bis 6.4) mit dem Anbindungselement (6.1.3, 6.2.3) in unterschiedlichen, um diesen Gelenkpunkt (6.1.1, 6.2.1, 6.3.1, 6.4.1, 6.1.2, 6.2.2, 6.3.2, 6.4.2) gedrehten Drehpositionen in einem der jeweiligen Drehposition zugeordneten Befestigungs-Anbindungselement (4.1.3 bis 4.1.n, 4.2.3 bis 4.2.n) befestigbar ist.

4. Befestigungsvorrichtung (3) nach einem der vorhergehenden Ansprüche, wobei
- die Fahrzeug-Befestigungsanordnung (4) zwei sich gegenüberliegende und beabstandet zueinander angeordnete Fahrzeug-Befestigungselemente (4.1, 4.2) zur Befestigung an der Fahrzeugstruktur aufweist,
- die Koppelelement-Befestigungsanordnung (5) zwei sich gegenüberliegende und beabstandet zueinander angeordnete Koppelelement-Befestigungselemente (5.1, 5.2) zur Befestigung zumindest eines Koppelelements (2) aufweist,
- die Parallelogrammführung (6) zumindest vier Gelenkarme (6.1 bis 6.4) aufweist,
- zwei Gelenkarme (6.1 ,6.3) jeweils einen Gelenkpunkt (6.1.1, 6.3.1), welcher mit einem Befestigungs-Gelenkpunkt (4.1.1, 4.1.2) einer der Fahrzeug-Befestigungselemente (4.1, 4.2) drehbar gekoppelt ist, und jeweils einen Gelenkpunkt (6.1.2, 6.3.2), welcher mit einem Befestigungs-Gelenkpunkt (5.1.1, 5.1.2) einer der Koppelelement-Befestigungselemente (5.1, 5.2) drehbar gekoppelt ist, aufweisen und
- die beiden verbleibenden Gelenkarme (6.2, 6.4) jeweils einen Gelenkpunkt (6.2.1, 6.4.1), welcher mit einem Befestigungs-Gelenkpunkt (4.2.1, 4.2.2) des weiteren gegenüberliegenden Fahrzeug-Befestigungselements (4.2) drehbar gekoppelt ist, und jeweils einen Gelenkpunkt (6.2.2, 6.4.2), welcher mit einem Befestigungs-Gelenkpunkt (5.2.1, 5.2.2) des weiteren gegenüberliegenden Koppelelement-Befestigungselements (5.2) drehbar gekoppelt ist, aufweisen.

5. Befestigungsvorrichtung (3) nach Anspruch 4, wobei
- zumindest einer der Gelenkarme (6.1 bis 6.4), welcher mit einem Befestigungs-Gelenkpunkt (4.1.1, 4.1.2) einer der Fahrzeug-Befestigungselemente (4.1, 4.2) und mit einem Befestigungs-Gelenkpunkt (5.1.1, 5.1.2) einer der Koppelelement-Befestigungselemente (5.1, 5.2) drehbar gekoppelt ist, ein beabstandet zu beiden Gelenkpunkten (6.1.1, 6.1.2, 6.3.1, 6.3.2) des Gelenkarms (6.1, 6.3) angeordnetes Anbindungselement (6.1.3) aufweist,
- ein weiterer Gelenkarm (6.2, 6.4), welcher mit einem Befestigungs-Gelenkpunkt (4.2.1, 4.2.2) des weiteren gegenüberliegenden Fahrzeug-Befestigungselements (4.2) und mit einem Befestigungs-Gelenkpunkt (5.2.1, 5.2.2) des weiteren gegenüberliegenden Koppelelement-Befestigungselements (5.2) drehbar gekoppelt ist, ein beabstandet zu beiden Gelenkpunkten (6.2.1, 6.2.2, 6.4.1, 6.4.2) des Gelenkarms (6.2, 6.4) angeordnetes Anbindungselement (6.2.3) aufweist,
- beide Fahrzeug-Befestigungselemente (4.1, 4.2) und/oder beide Koppelelement-Befestigungselemente (5.1, 5.2) jeweils mehrere auf einem sich radial um einen Befestigungs-Gelenkpunkt (4.1.1, 4.1.2, 4.2.1, 4.2.2, 5.1.1, 5.1.2, 5.2.1, 5.2.2), an welchem der jeweilige Gelenkarm (6.1 bis 6.4) mit einem der Gelenkpunkte (6.1.1, 6.2.1, 6.3.1, 6.4.1, 6.1.2, 6.2.2, 6.3.2, 6.4.2) drehbar befestigt ist, angeordneten Kreisabschnitt angeordnete Befestigungs-Anbindungselemente (4.1.3 bis 4.1.n, 4.2.3 bis 4.2.n) aufweisen und
- die Gelenkarme (6.1 bis 6.4) mit dem Anbindungselement (6.1.3, 6.2.3) in unterschiedlichen, um diesen Gelenkpunkt (6.1.1, 6.2.1, 6.3.1, 6.4.1, 6.1.2, 6.2.2, 6.3.2, 6.4.2) gedrehten Drehpositionen in einem der jeweiligen Drehposition zugeordneten Befestigungs-Anbindungselement (4.1.3 bis 4.1.n, 4.2.3 bis 4.2.n) befestigbar sind.

6. Befestigungsvorrichtung (3) nach einem der Ansprüche 2 bis 5, wobei
- die Gelenkpunkte (6.1.1, 6.2.1, 6.3.1, 6.4.1, 6.1.2, 6.2.2, 6.3.2, 6.4.2) der Gelenkarme (6.1 bis 6.4), die Befestigungs-Gelenkpunkte (4.1.1, 4.1.2, 4.2.1, 4.2.2) der Fahrzeug-Befestigungsanordnung (4) und die Befestigungs-Gelenkpunkte (5.1.1, 5.1.2, 5.2.1, 5.2.2) der Koppelelement-Befestigungsanordnung (5) jeweils als Bohrung ausgebildet sind und
- die entsprechenden Gelenkpunkte (6.1.2, 6.2.2, 6.3.2, 6.4.2) der Gelenkarme (6.1 bis 6.4) an den Befestigungs-Gelenkpunkten (4.1.1, 4.1.2, 4.2.1, 4.2.2) der Fahrzeug-Befestigungsanordnung (4) und die entsprechenden Gelenkpunkte (6.1.1, 6.2.1, 6.3.1, 6.4.1) der Gelenkarme (6.1 bis 6.4) an Befestigungs-Gelenkpunkten (5.1.1, 5.1.2, 5.2.1, 5.2.2) der Koppelelement-Befestigungsanordnung (5) jeweils mittels einer Schrauben-Mutter-Befestigung (S1 bis S4, S5 bis S9) gekoppelt sind.

7. Anhängerzugvorrichtung (1), aufweisend
- eine Befestigungsvorrichtung (3) nach einem der vorhergehenden Ansprüche und
- zumindest ein an der Koppelelement-Befestigungsanordnung (5) befestigtes Koppelelement (2).

8. Anhängerzugvorrichtung (1) nach Anspruch 7, wobei das Koppelelement (2)
- zumindest einen Kugelkopf und/oder
- zumindest eine Bolzenanordnung aufweist.

9. Fahrzeug, aufweisend
- eine Fahrzeugstruktur und
- eine mittels der Fahrzeug-Befestigungsanordnung (4) an der Fahrzeugstruktur befestigte Befestigungsvorrichtung (3) nach einem der Ansprüche 1 bis 6.

10. Fahrzeug, aufweisend
- eine Fahrzeugstruktur und
- eine mittels der Fahrzeug-Befestigungsanordnung (4) an der Fahrzeugstruktur befestigte Anhängerzugvorrichtung (1) nach Anspruch 7 oder 8.
